# EUROPEAN PATENT APPLICATION

(11) **EP 1 536 358 A1**
(43) Date of publication of application: **01.06.2005**
(21) Application number: 03791428.0
(22) Date of filing: 29.08.2003
(51) Int. Cl.: G06F 17/60

(54) **CONTENT DISTRIBUTION SYSTEM MANAGEMENT DEVICE, READING DEVICE, PROGRAM, AND METHOD**

(30) Priority: 30.08.2002 JP 2002255953
(71) Applicant: Kabushiki Kaisha Toshiba, Tokyo 105-8001 (JP)
(72) Inventor: MATSUKAWA, Shinichi, c/o Intellectual Pty Div., Tokyo 105-8001 (JP); KASAHARA, Akihiro, c/o Intellectual Pty Div., Tokyo 105-8001 (JP); SUU, Hiroshi, c/o Intellectual Pty Div., Tokyo 105-8001 (JP); KATO, Taku, c/o Intellectual Pty Div., Tokyo 105-8001 (JP)
(74) Representative: HOFFMANN - EITLE
(86) International application number: PCT/JP2003/011107
(87) International publication number: WO 2004/021237

(57) **Abstract**

A present invention is related to a management apparatus for a content distribution system, a browsing apparatus, a program and a method for further facilitating a distribution of content. A management apparatus (10) comprises a function of managing a content ID indicating encrypted content information, a content ID indicating a user and a group of a distributor ID indicating a distribution agent or a distribution user of the content information and a function of transmitting key information when receiving a transmission request including key price information equivalent to key price or key price paid information and each ID. Therefore, since a distribution route is specified only by the distributor ID different from conventional distribution information, the distribution system can be simplified.

## Description

### Technical Field

This method relates to a management apparatus for a content distribution system, an apparatus for browsing, a program, and a method used for an arbitrary electronic book (e-book), music, animation, etc.

### Background Art

In recent years, a content distribution system for distributing content in which a book, a newspaper, etc., are computerized to a user terminal and making it possible to browse the content has widely been used with the progress of an information-intensive society.

As such a distribution system, for example, a charging receiving technique for popularizing the e-book, etc., via a network is considered by appropriately processing a counter value for the distribution of the content (Refer to Jpn. Pat. Appln. KOKAI Publication No. 2002-109398, the sixth paragraph).

This technique is one for transmitting information about dividends to a delivery company, etc., based on a distribution route ID of the content from a viewpoint to appropriately process the counter value (Refer the Kokai Publication, the seventy-seventh paragraph).

However, such a distribution system has no problem from an ordinary viewpoint, but it is considered that there is a room to study other techniques for further facilitating the distribution of the content.

An object of the present invention is to provide a management apparatus, an apparatus for browsing, a program and a method for a content distribution system capable of facilitating the distribution of the content.

### Disclosure of Invention

According to a first aspect of the present invention, there is provided a management apparatus for a content distribution system for distributing content by separately distributing encrypted content information and key information capable of decoding the content information to a user, the management apparatus comprising: management means for managing a content ID, a user ID indicating the user and a group of a distributor ID indicating a distributor or a distributed user of the content information and transmitting the key information when receiving a transmission request including key price information equivalent to a key price of the key information or key price paid information and each of the ID.

Thus, since a distribution route is specified only by a distributor ID without having to use complicated distribution route information, the system can be simplified and the distribution of the content can be further facilitated.

Since a distributor is not limited to a seller, and a generic user also can be the distributor, the distribution route of the content can be flexibly and easily managed.

In a first aspect of the present invention, although a management apparatus of a whole of a system is expressed as "apparatus", it is needless to say that it is possible to express each apparatus or an assembly of each apparatus as "system", "apparatus", "program", "computer readable storage medium" or "method", respectively, without limiting the expression as "apparatus".

### Brief Description of Drawings

FIG. 1 is a schematic diagram showing the configuration of a content distribution system regarding a first embodiment of the present invention;
FIG. 2 is a schematic diagram showing the configuration of a content-key database (DB) in the first embodiment;
FIG. 3 is a schematic diagram for explaining encrypted content information in the first embodiment;
FIG. 4 is a schematic diagram for explaining key information in the first embodiment;
FIG. 5 is a schematic diagram showing the configuration of a purchase history DB in the first embodiment;
FIG. 6 is a schematic diagram showing the configuration of a content distribution system regarding a second embodiment of the present invention;
FIG. 7 is a schematic diagram showing the configuration of a management center apparatus in the second embodiment;
FIG. 8 is a schematic diagram showing the configuration of a content provider DB in the second embodiment;
FIG. 9 is a schematic diagram showing the configuration of a user group DB in the second embodiment;
FIG. 10 is a schematic diagram showing the configuration of a user DB in the second embodiment;
FIG. 11 is a schematic diagram showing the configuration of a distribution window DB in the second embodiment;
FIG. 12 is a schematic diagram showing the configuration of a settlement window DB in the second embodiment;
FIG. 13 is a schematic diagram for explaining a content registration part in the second embodiment;
FIG. 14 is a schematic diagram for explaining a content distribution part in the second embodiment;
FIG. 15 is a schematic diagram for explaining a group processing part in the second embodiment;
FIG. 16 is a schematic diagram for explaining a key distribution part in the second embodiment;
FIG. 17 is s schematic diagram for explaining a key attribute in the second embodiment;
FIG. 18 is a schematic diagram for explaining a profit distribution part in the second embodiment;
FIG. 19 is a schematic diagram showing the configuration of a distribution window apparatus in the second embodiment;
FIG. 20 is a schematic diagram for explaining a content request part in the second embodiment;
FIG. 21 is a schematic diagram showing the configuration of a content storage medium in the second embodiment;
FIG. 22 is a schematic diagram showing the configuration of a key storage medium in the second embodiment;
FIG. 23 is a schematic diagram showing the configuration of a user terminal in the second embodiment;
FIG. 24 is a schematic diagram for explaining a key encryption part in the second embodiment;
FIG. 25 is a schematic diagram for explaining a key verification processing part in the second embodiment;
FIG. 26 is a schematic diagram for explaining a browsing processing part in the second embodiment;
FIG. 27 is a schematic diagram for explaining a browsing function of the browsing processing part in the second embodiment;
FIG. 28 is a schematic diagram for explaining a user ID adding part in the second embodiment;
FIG. 29 is a schematic diagram showing the configuration of a settlement window apparatus in the second embodiment;
FIG. 30 is a schematic diagram showing the configuration of a content distribution system regarding a third embodiment;
FIG. 31 is a schematic diagram showing the configuration of a content distribution system regarding a fourth embodiment;
FIG. 32 is a schematic diagram showing the configuration of a key-content storage medium adopted to a content distribution system regarding a fifth embodiment;
FIG. 33 is a schematic diagram showing a part of the configuration of a content distribution system regarding a ninth embodiment;

### Best Mode for Carrying Out the Invention

Hereinafter, each embodiment of the present invention will be explained by referring drawings.

### (A first embodiment)

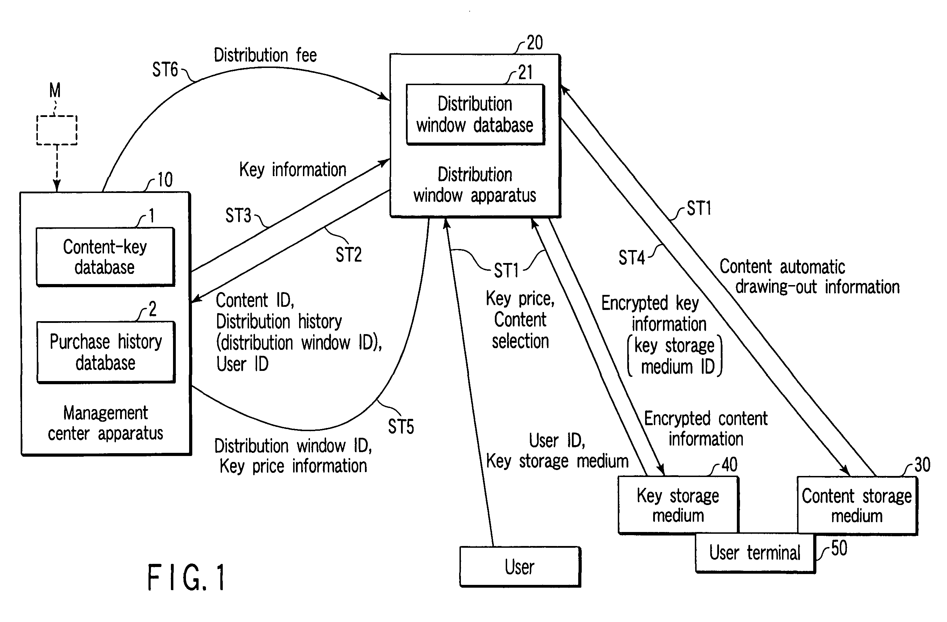

FIG. 1 is the schematic diagram showing the configuration of the content distribution system regarding the first embodiment of the present invention. This content distribution system is composed of a management center apparatus 10, a distribution window apparatus 20, a content storage medium 30, a key storage medium 40 and a user terminal 50. The storage media 30 and 40 might be physically mounted in one storage medium as shown in the fifth embodiment.

Here, the center apparatus 10 relates to encryption of content, ID management, profit distribution, etc., as mentioned in detail later, and provided with a content-key database (DB) 1 and a purchase history DB 2 so that they can be read out and written in.

The center apparatus 10 has a function to transmit corresponding information about a key (expressed as key information hereafter) to the window apparatus 20, based on the notification (content ID, distribution history and user ID) from the window apparatus 20.

The center apparatus 10 has a function to transmit corresponding distribution fee information to the window apparatus 20, based on notification (distribution window ID and information about a price of a key [expressed as key price information hereafter]).
The key price information may be key price paid information, and the same goes in each following embodiment.

The center apparatus 10 can be achieved as a configuration of a combination of hardware and software. The software configuration is achieved by pre-installing the software into a computer of the center apparatus 10 from a storage medium M. This program has a program code to make the computer execute each function described later. A configuration of such a combination of the hardware and the software can be similarly adapted to other center apparatus 20, etc., and similarly adapted to following each embodiment.

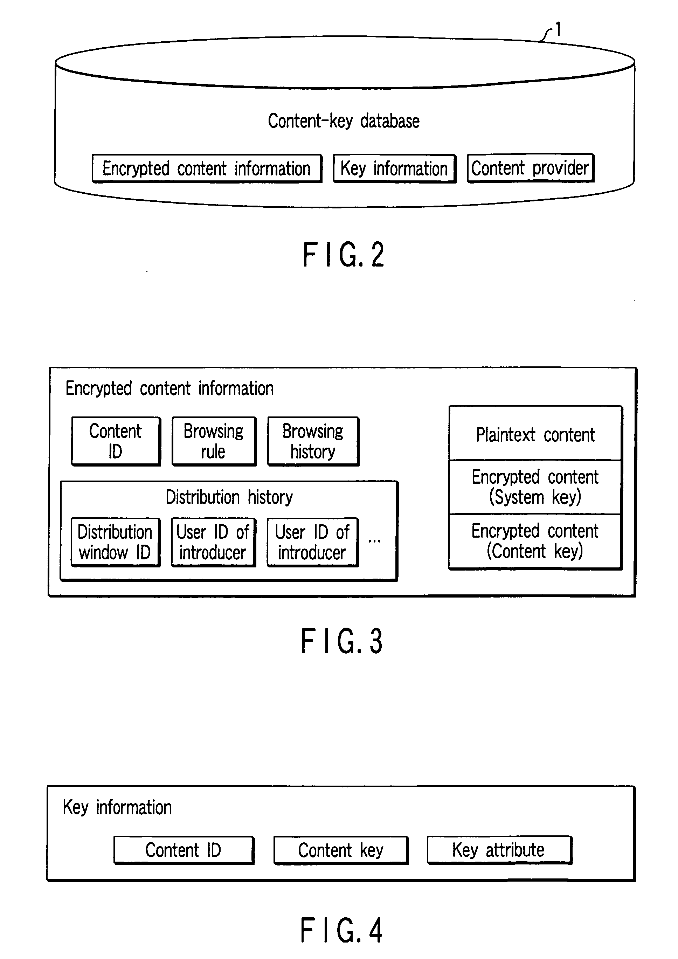

Here, the content-key DB 1 stores a group of key information and a content provider ID at every item of encrypted content information as shown in FIG. 2, however, it may store other information regarding the content responding to a situation. The content provider means a person who has a copyright and intends to distribute the content through this content distribution system. Each DB may be achieved by a hardware configuration of a memory, a hard disk, etc, and it may be replaced with a data storage apparatus.

The encrypted content information includes, as shown in FIG. 3, a browsing rule (browsing rule of content defined by the content provider, management information), a browsing history, electronic content (a first part of a plaintext, a second part encrypted with a system key, a third part encrypted with a content key), and a distribution history (a sales window ID, a user ID of the first introduced use, and a user ID of the secondly introduced, etc.).

In this distribution system, the thing called content means one including the electronic content and information about the browsing rule. The system key means a key shared by a center apparatus 10 and a user terminal 50.

As shown in FIG. 4, the key information includes the content key (a key for decoding the encrypted content information), a key attribute (an attribute owned by the key information, for example, a use time limit, etc.) at every content ID. That is, the key information in the distribution system is transmitted and received as one set.

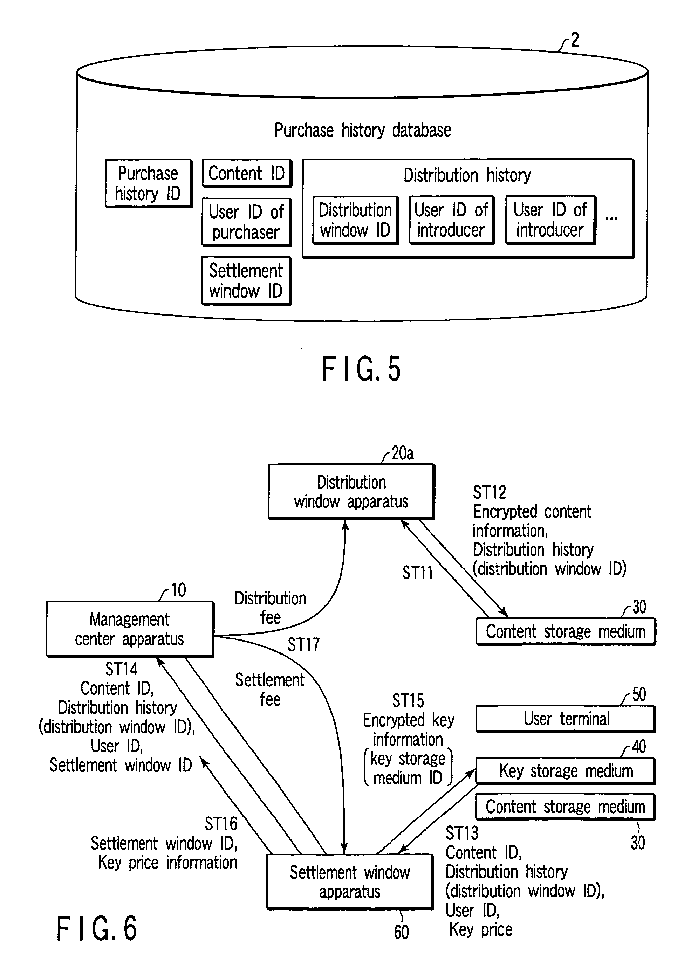

As shown in FIG. 5, a purchase history DB 2 stores the content ID, the user ID of a purchaser, after-mentioned settlement window ID and the distribution history at every history ID. The user who is a purchaser may become an introducer as described later. The distribution history is a history of an ID of a person who has distributed, and is initially a history of the distribution window ID (distributor ID), however, becomes subsequently the user ID (distributing user ID) indicating a user who has introduced the encrypted content.

The distribution window apparatus 20 is a computer which previously stores the distribution window ID indicating the apparatus 20 itself and has a download function and a key price processing function of the distribution window ID and the encrypted content information, etc.

The distribution window apparatus 20 can be achieved in any form such as (1)-(5).
(1) A terminal apparatus installed at a kiosk at a station, a convenience store, etc.
(2) A terminal apparatus installed at a book store.
(3) A server apparatus (virtual store on Web) connected to the Internet.
(4) A hotspot (e.g., a transmission station installed
   at an automatic gate machine or a smoking spot (ash tray, etc.) at a station.
(5) A distribution apparatus for a CD-ROM or a DVD installed at a CD shop, etc.

However, the distribution window apparatus 20 in this embodiment will be explained by taking an apparatus such as above mentioned (1), (2) or (5) allowing a user to input the key price (bill and/or coin) as an example. In the case of other forms (3) or (4), or in the case of viewing/listening of the encrypted content introduced by other users, the user terminal 50 may be achieved as an apparatus comprising a function for transmitting the key price information (electronic money or settlement information) and the distribution window ID and a function for receiving the key information transmitted from the management center apparatus 10.

Furthermore, the distribution window apparatus 20 in the present embodiment is basically a pull type one for allowing a user to actively download the encrypted content information. However, the window apparatus 20 can be also achieved as a push type one for allowing the user to passively receive the encrypted content information as in the form (4).

The above described downloading function of the window apparatus 20 is composed of following each function (DL 1)-(DL 7).
(DL 1): A function of reading the user ID stored in the key storage medium 40 when the content storage medium 30 is inserted.
(DL 2): A function of reading the content ID downloaded from content automatic drawing-out information stored in the content storage medium 30 when the key storage medium 40 is inserted. Here, the drawing-out information is information for previously specifying the encrypted content information to be downloaded, and it is not limited merely to ID information but it may be ID control information in combination time information such as the day of the week and a date with the ID information. In the case of the ID control information, this function is useful for changing the encrypted content information to be downloaded, for example, to download certain content information on Monday and download other encrypted content information on Tuesday.
(DL 3): A content specifying function of displaying a list of content possible to be downloaded from the window apparatus 20 and reading the content ID from the list by an operation of the user.
   It is enough for this download function to be provided with at least either the function (DL 2) or the function (DL 3).
(DL 4): A function of retrieving a distribution window DB 21, based on the content ID and confirming the fact of the existence of the relevant encrypted content information when the key price is paid.
(DL 5): A function of notifying the content ID, the distribution history (distribution window ID) and the user ID to the management center apparatus 10.
(DL 6): A function of downloading the encrypted content information into the content storage medium 30.
(DL 7): A function of reading the key storage medium ID from the key storage medium 40, encrypting the key information with a key encryption unit (not shown) and writing it into the key storage medium 40.

The key price processing function above described has a function of transmitting the key charge information corresponding to the key price and the distribution window ID to the center apparatus 10 after transmitting the key information to the user terminal 50. When transmitting the key price information and the distribution window ID (or the user ID of the introducer), it is preferable to protect transmission content by using an existing encryption technique, this is the same in each following embodiment.

The distribution window content DB 21 can read/write from/into the window apparatus 20 and stores the encrypted content information at each content ID.

The content storage medium 30 is a memory card carried by the user and capable of writing the encrypted content information from the window apparatus 20 and reading it from the user terminal 50. The content storage medium 30 might previously store the content automatic drawing-out information indicating the encrypted content information to be downloaded from the window apparatus 20. However, the content storage medium 30 may be not limited to readable/writable one but may be a memory card to be readable the encrypted content information.

The key storage medium 40 is a memory card carried by the user and capable of reading out the user ID from the window apparatus 20 and writing the encrypted key information from the user terminal 50. The key storage medium 40 previously stored the key storage medium ID indicating the storage medium itself and the user ID indicating the user. As for the key storage medium 40, a safety one is used.

The user terminal 50 has a function of detachably holding the content storage medium 30 and the key storage medium 40, and a function of decoding the encrypted content stored in the content storage medium 30 by using the key information and displaying the acquired content. As for the user terminal 50, a dedicated viewer, a PC, a multi-purpose PDA, etc., are available.

Next, operations of the content distribution system configured as described above will be explained.

When the content and key storage media 30, 40 are inserted into the distribution window apparatus 20 by the user's operation, the window apparatus 20 acquires the content ID by either the function of reading out the content automatic drawing-out information stored in the content storage medium 30 or the function of specifying the content. The window apparatus 20 reads out the user ID stored in the key storage medium 40.

Then, when the key price is paid by the user's operation at the window apparatus 20 (ST 1), it retrieves the distribution window DB 21, based on the content ID and confirms the existence of the relevant encrypted content information. If no existence, the window apparatus 20 transmits the content ID to the center apparatus 20 and downloads the encrypted content information, however, it assumes the existence of the encrypted content information this time.

Next, the window apparatus 20 notifies the content ID, the distribution history (distribution window ID) and the user ID to the center apparatus 10 (ST 2).

The center apparatus 10 transmits the key information corresponding to the content-key DB 1 to the window apparatus 20, based on the notified content (ST 3).

The window apparatus 20 downloads the encrypted content information into the content storage medium 30. The window apparatus 20 encrypts the key information by using the key storage medium ID by the key encryption unit and writes it into the key storage medium 40 (ST 4).

After that, the window apparatus 20 transmits the key price information equivalent to the key price and the distribution window ID to the center apparatus 10 (ST 5).

The center apparatus 10 transmits the distribution fee information equivalent to distribution fee in response to the distribution history (ST 6).

As described above, according to the embodiment, the distribution system specifies the distributor by using the distribution window ID indicating the window apparatus 20 without using the complicated distribution route information. Therefore, the distribution system can be simplified and thereby the distribution of the content can be further facilitated.

### (A second embodiment)

FIG. 6 is the schematic diagram showing the configuration of the content distribution system regarding the second embodiment, wherein like elements in FIG. 1 have the same reference marks put, sections different from one another will be mainly explained. The same goes for following embodiments and duplication in explanation will be eliminated.

That is, this embodiment is a modification of the first embodiment, instead of the distribution window apparatus 20 having the download function and the key price processing function, a distribution window apparatus 20a in which the key price processing function of the window apparatus 20 is eliminated. Accordingly, the window apparatus 20a has a settlement window apparatus 60 having the key price processing function, etc.

Hereafter, details of configurations of respective apparatuses in this embodiment will be explained.

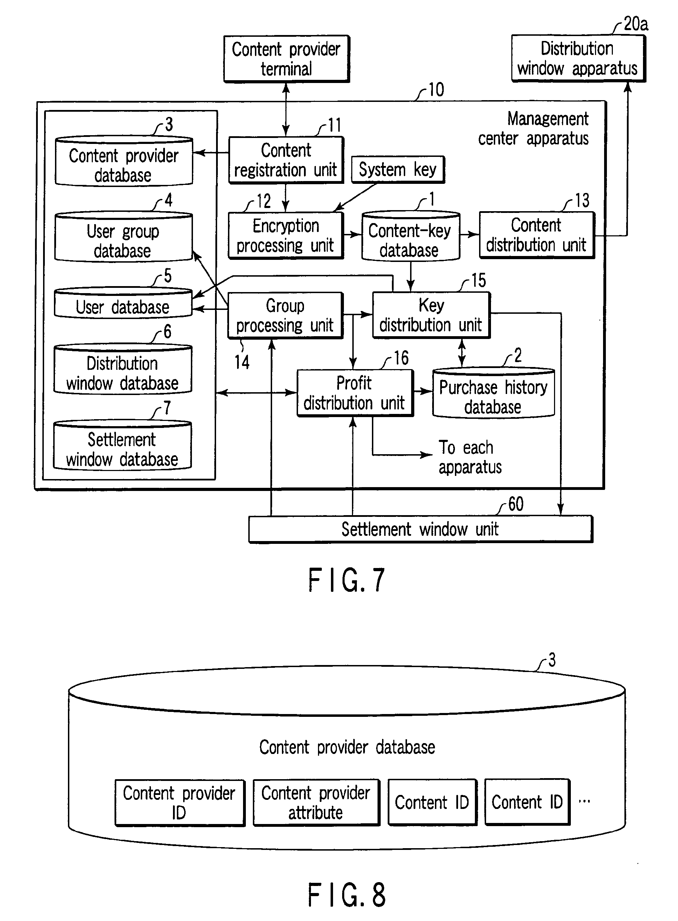

As shown in FIG. 7, the management center apparatus 10 has a content provider DB 3, a user group DB 4, a user DB 5, a distribution window DB 6 and a settlement window DB 7 so as to be readable/writable in addition to each of the content-key DB 1 and the purchase history DB 2 described above. The center apparatus 10 further has a content registration unit 11, an encryption processing unit 12, a content distribution unit 13, a group processing unit 14, a key distribution unit 15 and a profit distribution unit 16.

As shown in FIG. 8, the content provider DB 3 stores content provider attributes and one or more content at every content provider ID.

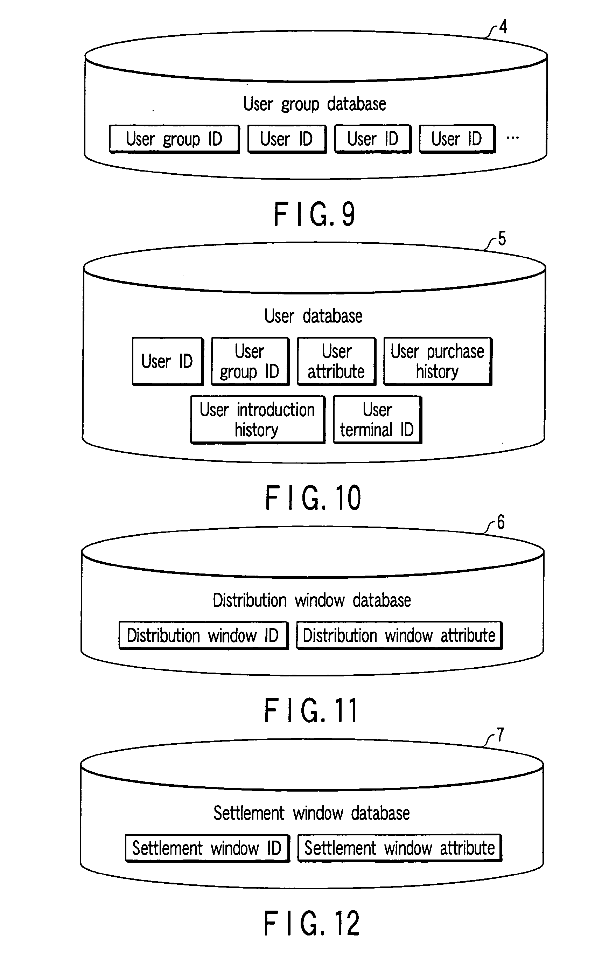

As shown in FIG. 9, the user group DB 4 stores one or more user IDs at every user group ID.

As shown in FIG. 10, the user group DB 5 stores a user group ID, a user attribute (e.g., name, address, etc.), a user terminal ID, a user purchase history (history information about purchase of the user) and user introduction history (history information about introductions of content by the user) at every user ID.

As shown in FIG. 11, the distribution window DB 6 stores a distribution window attribute at every distribution window.

As shown in FIG. 12, the accounting window DB 7 stores an account window attribute at every accounting window ID.

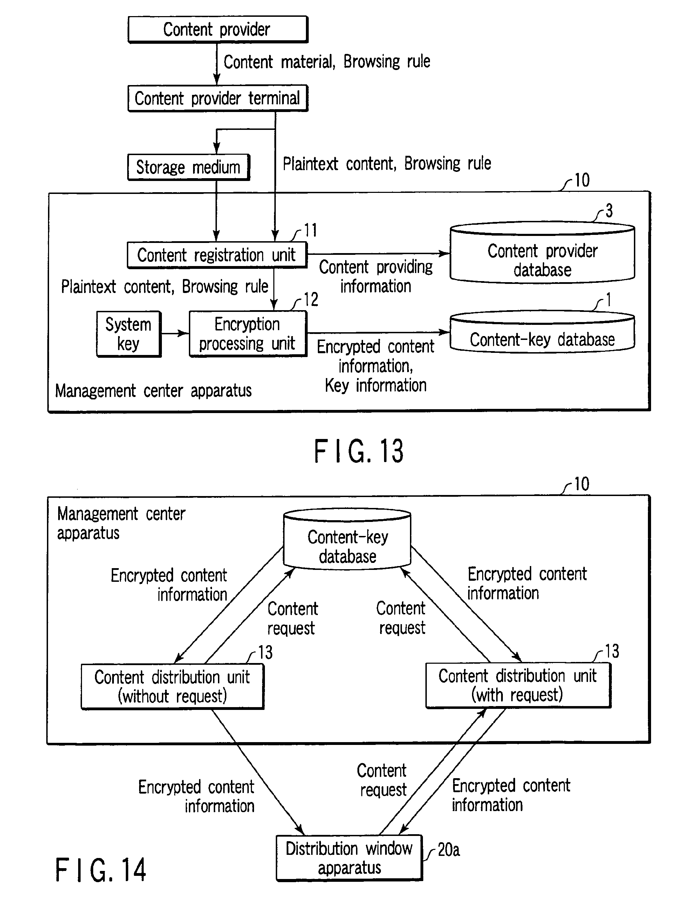

As shown in FIG. 13, the content registration unit 11 registers plaintext content and the browsing rule received from the terminal, etc., of the content provider. The content registration unit 11 has a function of registering a content provider attribute and content ID to the content provider DB 3 at every content provider ID and a function of transmitting the plaintext content and the browsing rule to the encryption processing unit 12.

The encryption processing unit 12 has a function of encrypting a part of or the whole of the plaintext content to generate the encrypted content information and key information among the plaintext content and the browsing rule received from the content registration unit 11 and a function of storing it into the content-key DB 1.

As shown in FIG. 14, the content distribution unit 13 has a function of distributing the encrypted content information stored in the DB 1 to the window apparatus 20a and a function of distributing the relevant encrypted content information stored in the DB 1 to the window apparatus 20a.

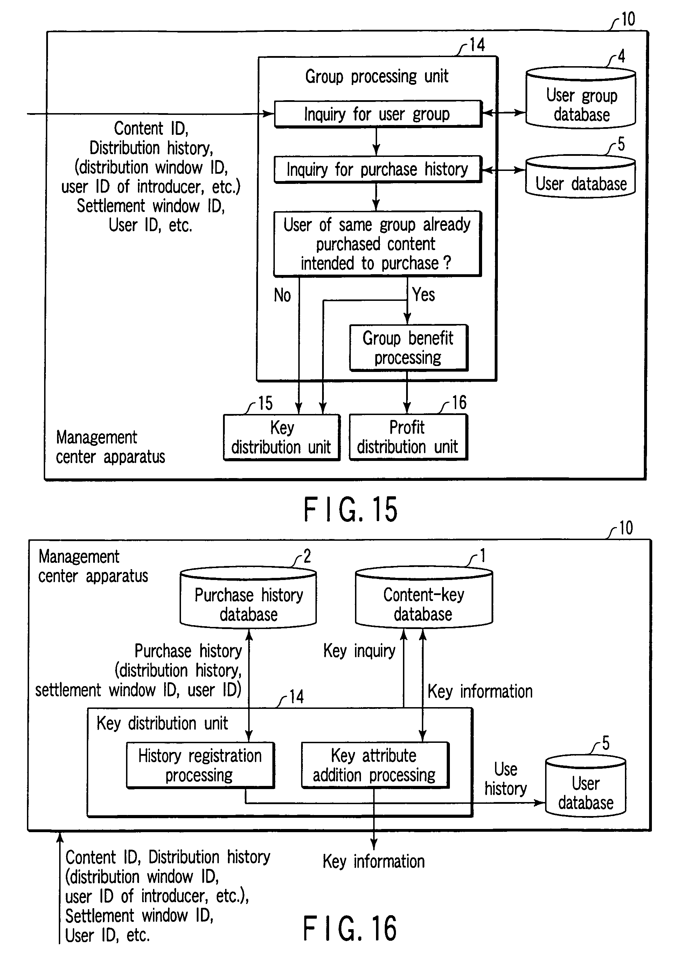

As shown in FIG. 15, when a key distribution request is issued, the group processing unit 14 can be eliminated at a step in which it performs the processing before the request has achieved a key distribution unit 15. The group processing unit 14, as shown in FIG. 15, has a function of determining whether another user of the group ID same as the user ID included in a purchase request has already purchased the same key information or not, a function of controlling a profit distribution unit 16 so as to conduct prescribed group benefit if the other user has purchased it according to the determination and a function of transmitting the purchase request, etc. to the key distribution unit 15.

Here, the group ID may be an ID for specifying not only a family, etc., but also an arbitrary group such as a fan club for a content creator (or a content provider). As for the group benefit processing, it is possible to set an arbitrary benefit at each group ID, wherein the key price is made free or discounted, the fee for the key is made free or discounted in proportion to the number of the user IDs included in the group ID.

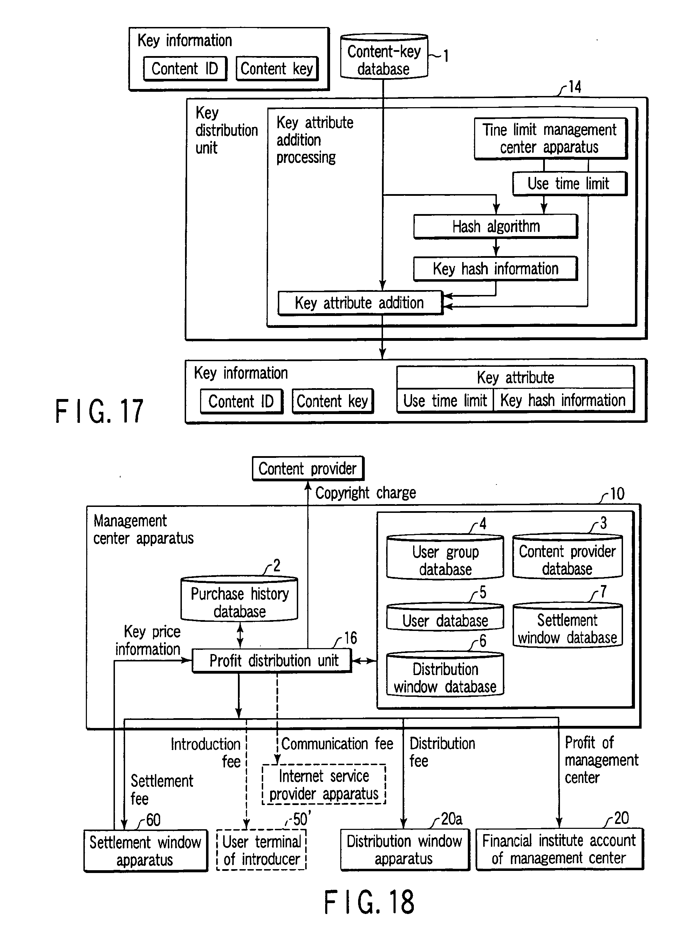

As shown in FIG. 16, the key distribution unit 15 has a function of storing the purchase history into the purchase history DB 2 according to the purchase request, etc. received from the group processing unit 14 or the user and a function of adding the key attribute to the corresponding key information stored in the DB 1 to distribute it to the window apparatus 60. Here, as shown in FIG. 17, for example, a use time limit or key hash information, etc. are used as the key attribute.

As shown in FIG. 18, the profit distribution unit 16 distributes the key price information received from the window apparatus 60 as an own profit and fees of each apparatus while referring each DB 2-7.

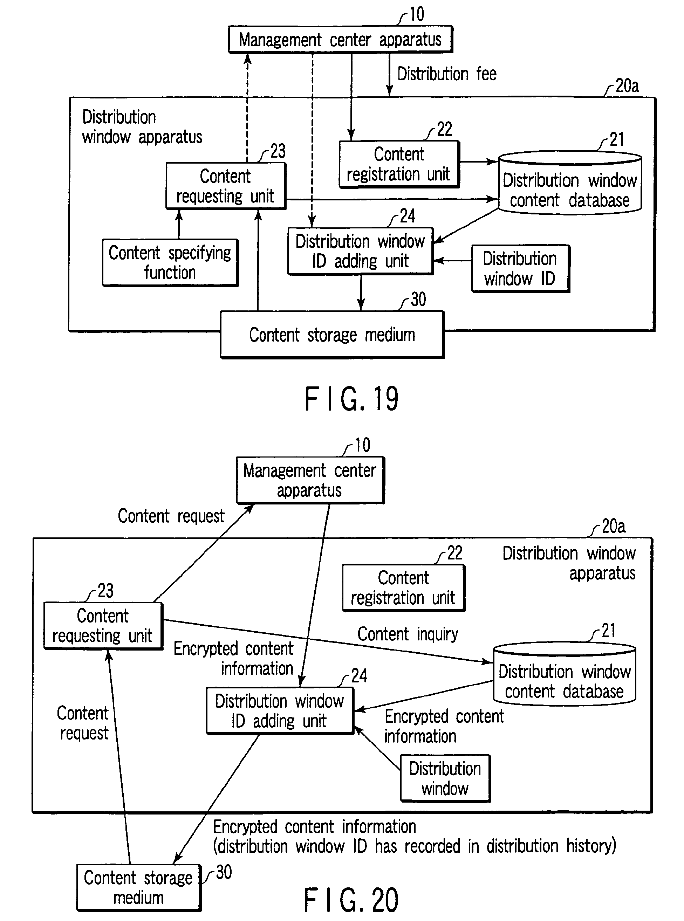

On the other hand, as shown in FIG. 19, the window apparatus 20a has a content registration unit 22, a content requesting unit 23 and a distribution window ID adding unit 24 in addition to the distribution window DB 21.

The content registration unit 22 has a function of registering the encrypted content information received from the center apparatus 10 into the DB 21.

As shown in FIG. 20, the content requesting unit 23 has a function of inquiring the content to the DB 21 according to the content automatic drawing-out information stored in the storage medium 30 inserted into the window apparatus 20a or the content ID from the content specifying function. Here, if there is relevant encrypted content information as a result of inquiry, the content requesting unit 23 has a function of transferring it to a distribution window ID adding unit 24. If there is no relevant encrypted content information as the result of inquiry, the content requesting unit 23 has a function of transmitting the content request to the center apparatus 10 and transmitting the corresponding encrypted content information to the ID adding unit 24.

The ID adding unit 24 has a function of adding the distribution window ID to the distribution history in the encrypted content information before writing the encrypted content information received from the DB 21 or the center apparatus 10 into the storing medium 30.

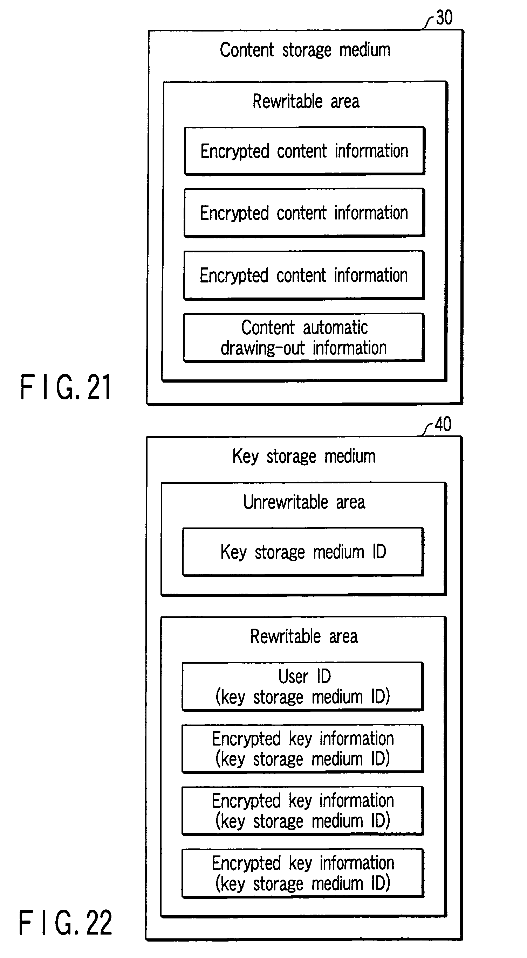

As shown in FIG. 21, the storage medium 30 has a rewritable area in which the content automatic drawing-out information (sometime not existing) and the encrypted content information is stored.

As shown in FIG. 22, the key storage medium 40, in the function above described, has a non-rewritable area in which the key storage medium ID is stored readably and a rewritable area in which encrypted key information, with the key information encrypted therein by using the key storage medium ID as a shared key, is stored so as to be readable/writable.

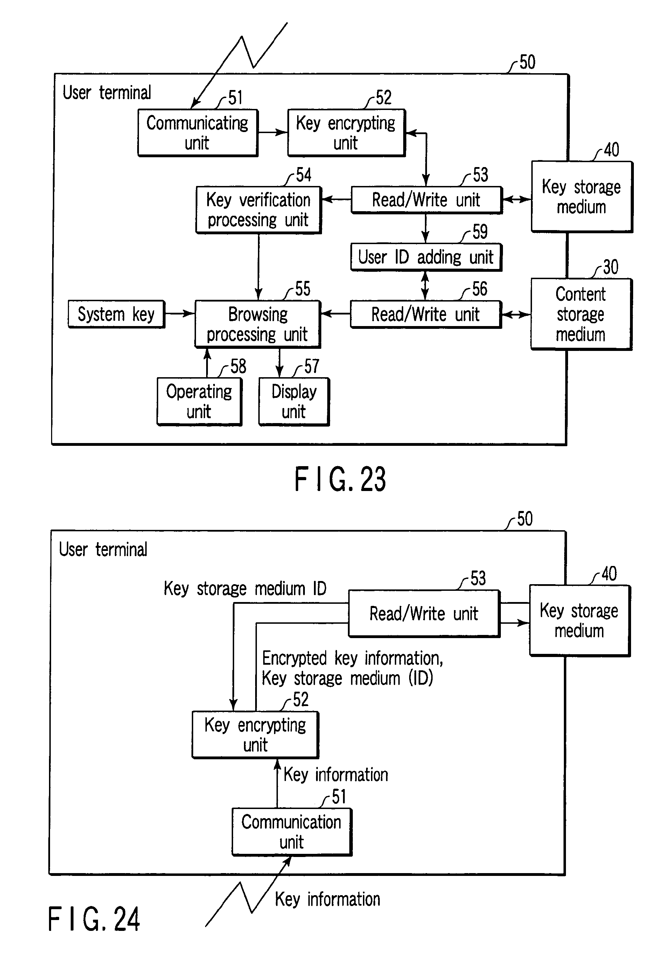

As shown in FIG. 23, a user terminal 50 comprises a communicating unit 51, an encrypting unit 52, a read/write (R/W) unit 53, a key verification processing unit 54, a browsing processing unit 55, a R/W unit 56, a display unit 57, an operating unit 58 and a user ID adding unit 59.

The communicating unit 51 has a function of transmitting the key information received from the settlement window apparatus 60 to the key encrypting unit 52.

As shown in FIG. 24, the key encrypting unit 52 encrypts the key information received from the communicating unit 51 according to the key storage medium ID read out from the key storage medium 40 through the R/A unit 53 and writes the acquired encrypted key information into the storage medium 40.

The R/W unit 53 is an interface to read/write data from the user terminal 50 into the storage medium 40.

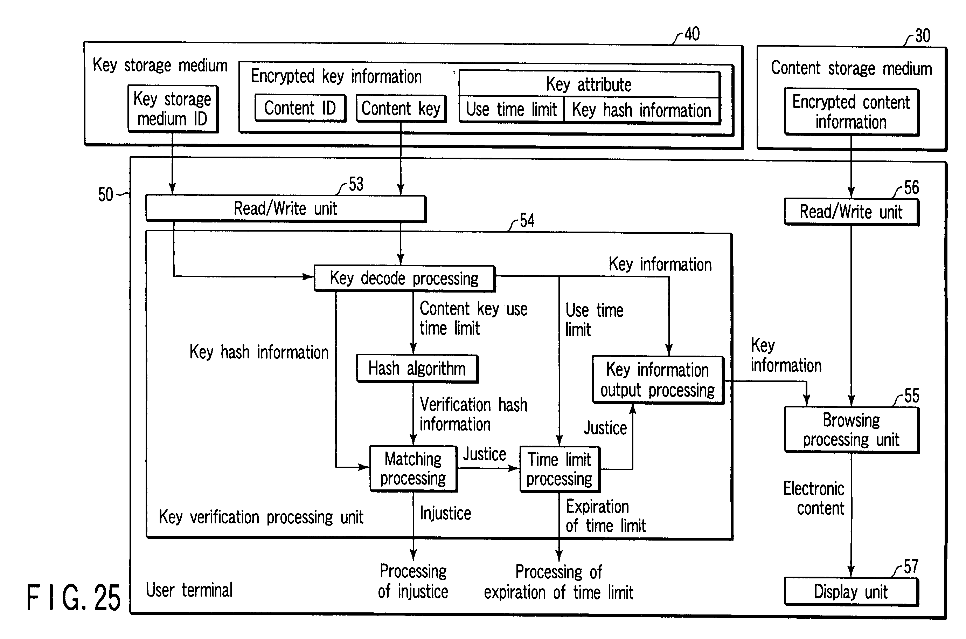

As shown in FIG. 25, the key verification processing unit 54 decodes the encrypted key information read out from the storage medium 40 through the R/W unit 53 verifies that it is not altered, then if the verification result is justifiable, outputs the key information to the browsing processing unit 55.
For example, key hash information or a use time limit in the key attribute becomes an object for the verification.

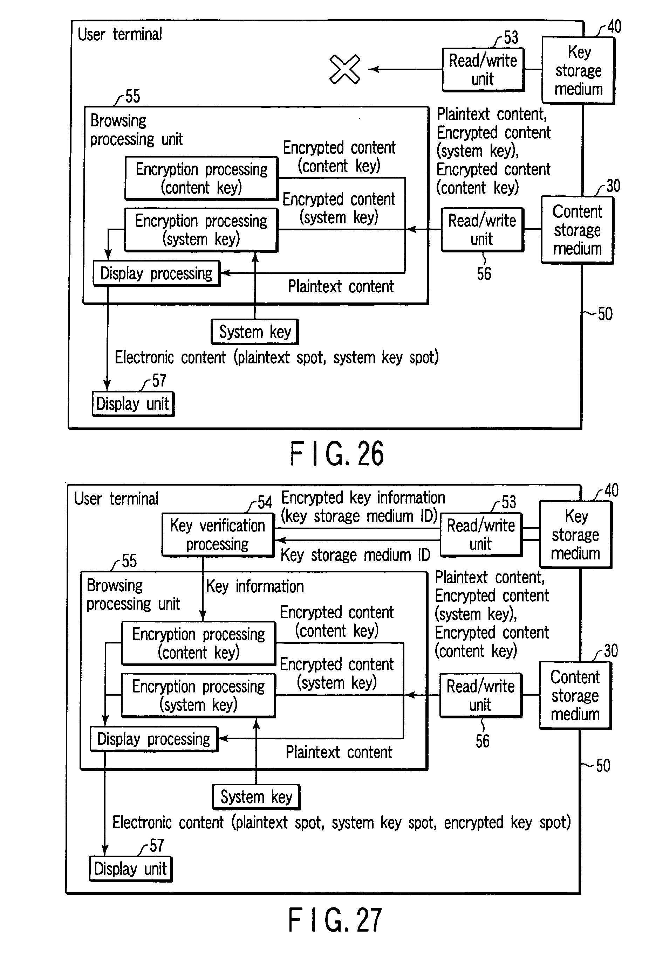

The browsing processing unit 55 has browsing functions as respectively shown in FIG. 26 and FIG. 27. The trial browsing function decodes the encrypted content information in the content storing medium 30, based on the system key and conducts display processing to output it to the display unit 57. The browsing function decodes the encrypted content information read out from the content storage medium 30 through the R/W unit 56, based on the system key and the key information from the key verification processing unit 54 and conducts the display processing to output it to the display unit 57.

The R/W unit 56 is an interface to read/write data to the content storage medium 30 from the user terminal 50.

The display unit 57 displays electronic content received from the browsing processing unit 55.

The operating unit 58 inputs a control signal to control a display spot into the browsing processing unit 55 by a user's operation.

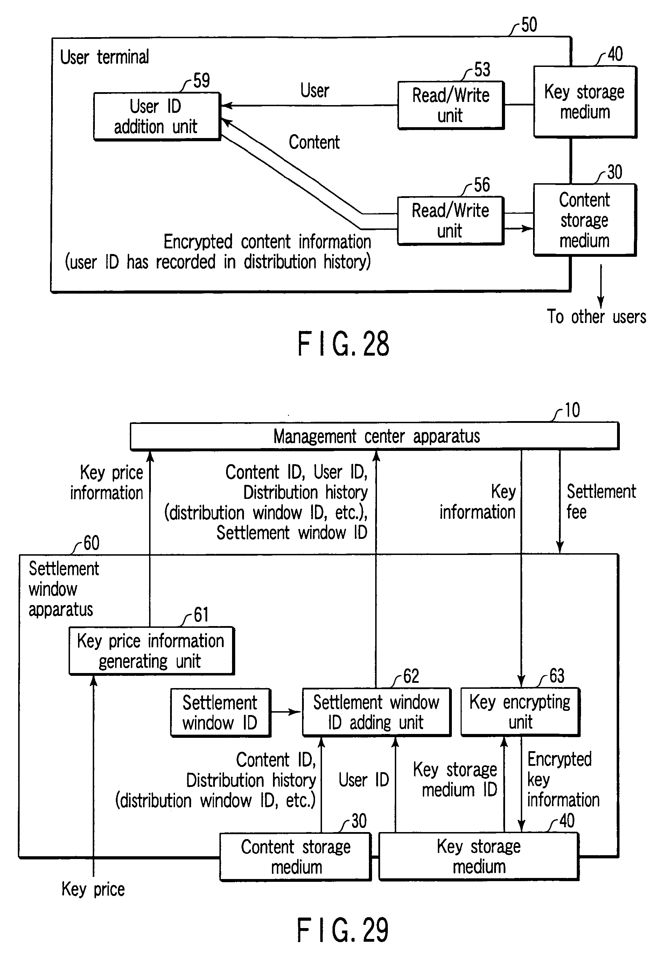

As shown in FIG. 28, the user ID adding unit 59 has a function of adding the user ID stored in the key storage medium 40 to the distribution history of the encrypted content information stored in the content storage medium 30.

On the other hand, as shown in FIG. 29, the settlement window apparatus 60 has a key price information generating unit 61, a settlement window ID adding unit 62 and a key encrypting unit 63.

The key price information generating unit 61 has a function of generating the key price information corresponding to the key price paid from the user, and transmitting the key price information to the management center apparatus 10.

The ID adding unit 62 adds the settlement window ID before transmitting the distribution history including the content ID read out from the storage medium 30 and the distribution window ID, etc. and the user ID read out from the storage medium 40.

The key encrypting unit 63 has a function of encrypting the key information according to the key storage medium ID read out from the storage medium 40, and directly writing the acquired encrypted key information into the storage medium 40, when the storage medium 40 is inserted into the settlement window apparatus 60 and the window apparatus 60 receives the key information from the center apparatus 10.

Next, the operations of the content distribution system configured as mentioned above will be explained by referring to FIG. 6. In respect to registration of the content, it is assumed that the content registration unit 11 of the center apparatus 10, the content registration unit 22 of the window apparatus 20a, etc. have already executed.

Now, when the storage medium 30 is inserted by the user's operation, the window apparatus 20a transfers the content ID of the content downloaded by reading out the drawing-out information from the storage medium 30 or by user's operation to the window apparatus 20a (ST 11). The window apparatus 20a retrieves the distribution window DB 21 according to the content ID and adds the distribution window ID to the relevant encrypted content information to download it into the storage medium 30 (ST 12). If the relevant encrypted content information does not exist in the DB 21, the window apparatus 20a downloads from the center apparatus 10 as above described and conducts similar processing.

Next, the content storage medium 30 is inserted into the user terminal 50 by user's operation, the browsing processing unit 55 conducts decoding processing (trial browsing processing) to the encrypted content information acquired in the step ST 12 only by using the system key.

At this time, the user determines whether or not the limit for the encrypted content information should be released or not. If the limit is not released, the process is completed at this step, however, the case of release will be explained.

The user inserts the storage media 30, 40.
Thereby, the settlement window apparatus 60 reads out the content ID and the distribution history stored in the storage medium 30 and reads out the user ID and the key storage medium ID stored in the key storage medium 40. The user pays the key price at the window apparatus 60 (ST 13).

The window apparatus 60 adds the settlement window ID to the content ID, the distribution history and the user ID and transmits them to the center apparatus 10 (ST 14).

The center apparatus 10 transmits the key information corresponding to the content ID to the window apparatus 60 after the group processing unit 14 determines presence or absence of an existing purchaser in the same group.

The window apparatus 60 encrypts the key information with the key storage medium ID received in the step ST 13 and writes it into the storage medium 40 (ST 15). Thereby, the user terminal 50 is enabled to conduct browsing processing for the encrypted content information.

The window apparatus 60 transmits the key price information equivalent to the key information and the settlement window ID to the center apparatus 10 after transmitting the key information (ST 16).

When the center apparatus 10 receives the key price information, etc., the profit distribution unit refers each DB 2-7, transmits a distribution fee to the window apparatus 20a and transmits a settlement fee to the window apparatus 60 (ST 17).

As described above, according to the embodiment, even if the window apparatuses 20a and 60 are separated each other, the similar action and effect can be obtained.

### (A third embodiment)

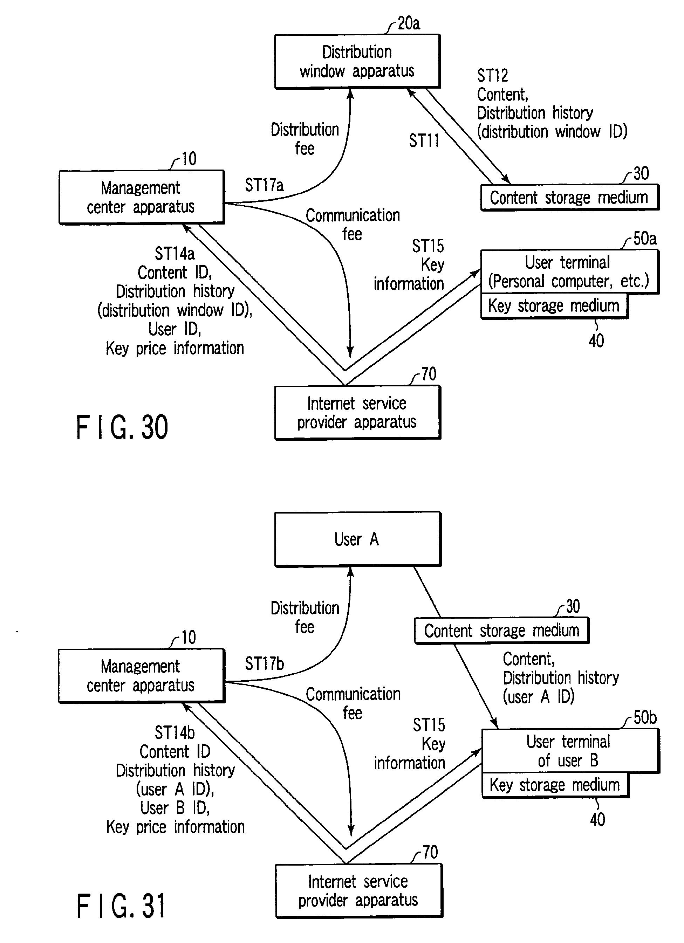

FIG. 30 is the schematic diagram showing the configuration of the content distribution system regarding a third embodiment of the present invention.

This embodiment is a modified example of the second embodiment, and an example having an Internet service provider (ISP) capable of receiving the key price information via communications for a payment on credit instead of the settlement window apparatus 60 for a payment on cash. Accordingly, this embodiment used a user terminal 50a defining the user terminal 50 as an apparatus (for example, a personal computer, etc.) possible to be connected to the Internet.

Such a configuration described above can have the same effect as that of the second embodiment.

### (A fourth embodiment)

FIG. 31 is the schematic diagram showing the configuration of the content distribution system regarding a fourth embodiment of the present invention.

This embodiment is an example applicable to the first to the third embodiments, however, now the third embodiment will be explained as a representative one.

That is, in the embodiment, a user B does not receive encrypted content information from the distribution window apparatus 20a, but receives content information from a user A with an introduction from the user A. Based on this, the last ID of the distribution history becomes not a distribution window ID but a user A ID.

Even in such a configuration, it has the same effect as that of the third embodiment. However, the distribution fee distributed from the center apparatus 10 is transmitted to the user A indicated with the last user A ID of the distribution history.

That is, according to the embodiment, not only the distribution window apparatuses 20a, 20 but also each user can distribute the encrypted content information, so that the content can be further easily distributed.

### (A fifth embodiment)

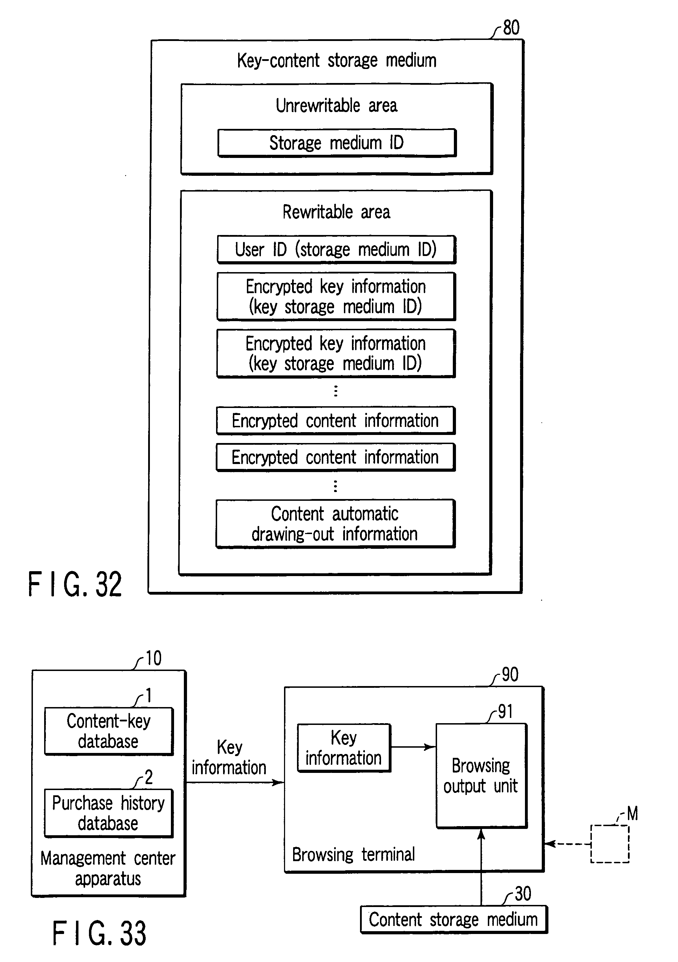

As shown in FIG. 32, this embodiment is a modified example of the first to fourth embodiments, and is configured by using an all-in-one type key-content storage medium 80 having a function of the key storage medium 40 and the content storage medium 30 instead of the media 40 and 30.

Specifically, the storage medium 80 has a unrewritable area and a rewritable area. The unrewritable area is an area to store a storage medium ID. The rewritable area is an area to store the user ID (already encrypted with the storage medium ID), encrypted key information, the content ID, content automatic drawing-out information and the encrypted content information so as to be read and written. The function of writing the content ID and the drawing-out information may be achieved, for example, on the distribution window apparatuses 20, 20a and the user terminal 50, 50a.

Even in such a configuration as described above, similar effects to the first to the fourth embodiments can be obtained, and the number of the storage medium necessary for the use of the distribution system can be set in one piece. The content ID of the content viewed and listened periodically can be edited personally.

### (A sixth embodiment)

This embodiment is a modified example of the fifth embodiment wherein the above-described content ID and content automatic drawing-out information can be set to the storage medium only one time.

As for such a storage medium, more specifically, a user setting storage medium (my medium) having both storage medium functions of a key-content storage medium 80 and the content storage medium 30 instead of the storage medium 80 is used.

At this point, the user setting storage medium sets a one-time-only rewritable area in the configuration of the storage medium 80, and writes the selected content ID into this storage area. The function of writing the content ID and the drawing-out information may be achieved by the distribution window apparatuses 20, 20a, etc. as described above.

According to the configuration above-mentioned, advantage of the both storage media of the storage media 80 and 30 can be achieved at the same time in addition to the effect of the fifth embodiment.

### (A seventh embodiment)

This embodiment is a modified example of the first to the sixth embodiments wherein the management center apparatus 10 has a deactivating function for inhibiting the transmission of the key information to an illegal user.

More specifically, the center apparatus 10 sets a flag indicating "illegal user" in a user attribute of the user DB 5, and does not transmit the key information even when receiving the user ID of the illegal user.

According to such a configuration above-mentioned, this embodiment can prevent illegal viewing/listening by an illegal user terminal 50.

### (A eighth embodiment)

This embodiment is a modified example of the first to the seventh embodiments, a plurality of pieces of key information are set to one piece of the encrypted content information. For example, if the content information is one from a newspaper, the key information is set to every article therein. This method is of course not limited to the newspaper and its article and is appropriately applicable in such a manner to set the key information to every music piece in a music album. Based on this, it is used for the key distribution part 15 of the center apparatus 10 to transmit a part of the key information among a plurality of pieces of key information at each purchase request.

According to such a configuration above-described, only the portion that is viewed and listened can be charged.

### (A ninth embodiment)

This embodiment is a modified example of the first to the fourth embodiments, as shown in FIG. 33, a browsing terminal 90 with the key information preinstalled therein is installed at a store front, on a train or an air plain, etc., and the content storage medium 30 with the encrypted content information readable by the browsing terminal 90 stored therein is distributed to the user.

Accordingly, the user can view and listen the content by temporarily occupying the browsing terminal 90 at the store front, etc., and it can purchase the key information if it takes a fancy to the content. Here, the user may transmit the purchase request for the key information to the center apparatus 10 by operating the browser terminal 90, and may transmit it though the window apparatuses, etc. in the same way as the above-mentioned embodiments. The person who installs the browsing terminal 90 can get the distribution fee as mentioned above.

Furthermore, when the person who has installed the browsing terminal 90 provides an additional service to the user, it is preferable for the person (distributor of the storage medium 30) to previously register the additional service information such as fee discount into the content-key DB 1, etc., of the center apparatus 10 at each own distributor ID and the content ID, whereby, even the same content, the additional service to be received by the user can be varied depending on the distributor from whom the user has acquired the encrypted content information. Specifically, the center apparatus 10 can charge a part of the purchase price charged to the user to the person who has installed the browsing terminal 90, based on each data (ID, etc.) transmitted at the time of purchasing of the key as described above. Such a method can be provided, for example, by an air carrier as a discount service of the content, etc., for a customer.

The method described in each above-described embodiment may be stored into a storage medium such as a magnetic disk (Floppy ® disk, hard disk, etc.), an optical disk (CD-ROM, DVD, etc.), a magnetic optical disk (MO), a semiconductor, etc., as a program enabled to be executed by each computer such as the center apparatus 10, the distribution window apparatuses 20, 20a, the user terminals 50, 50a, the accounting window apparatus 60, the ISP apparatus 70 and the browsing apparatus 90 and may be distributed.

As for the storage medium, any type of storing form is acceptable if the storage medium is one that can stores the program and is computer readable.

An operating system (OS) and middleware (MW) such as a DB management software and a network software operating on a computer according to an instruction installed onto the computer from the storage medium may execute a part of each processing to achieve this embodiment.

Moreover, the storage medium in the present invention is not limited to a medium independent from a computer, but includes even a storage medium in which a program transmitted via a LAN, the Internet, etc. is downloaded and stored or temporarily stored therein.

The storage medium is not limited in configuration, the storage medium in the present invention includes such a case that the processing in this embodiment is executed by means of a plurality of media, and any configuration for that of the medium is acceptable.

The computer in the present invention is one that executed each processing in this embodiment according to the program stored in the storage medium, and any configuration such as an apparatus composed of a personal computer, etc., a system in which a plurality of apparatuses are connected as a network or the like is preferable.

The computer in the present invention is not limited to a personal computer, but includes a calculation processing apparatus, a microcomputer, etc. included in information processing equipment, and collectively means the equipment and apparatus capable of achieving the function of the present invention owing to the program.

The present invention is not limited to each of the above-described embodiment, and in the steps of implementation, it is possible to be modified in a variety of modifications without departing from the spirit and the scope of the invention. Each embodiment may be implemented by appropriately combining one another as much as possible, and in this case, the effect of the combination is obtained. Moreover, inventions in a variety of steps are included in each of the embodiments, and a variety of inventions can be extracted by appropriately combining a plurality of disclosed constituting components. For example, if an invention is extracted by abbreviating some constituting components from the whole of the constituting components shown in the embodiments, the abbreviated parts are compensated by a well-known conventional technique.

As many apparently widely different embodiments of the present invention may be made without departing from the spirit and scope of thereof.

### Industrial Applicability

As stated above, the management apparatus for the content distribution system, the browsing apparatus, the program and the method of the present invention is useful to further facilitate the distribution of the content.

## Claims

1. A management apparatus (10) for a content distribution system for distributing content by separately distributing encrypted content information and key information capable of decoding the content information to a user **characterized by** comprising:
management means (1, 2) for managing a content ID, a user ID indicating the user and a group of a distributor ID indicating a distributor or a user which has delivered the content information and transmitting the key information when receiving a transmission request including key price information equivalent to a key price of the key information or key price paid information and each of the ID.

2. The management apparatus of claim 1, **characterized by** further comprising:
group processing means (4, 14) for managing a group of a group ID indicating a group to which the user belong and the user ID of the user and executing benefit processing to the user in response to the group ID of the same group as the user ID included in the transmission request.

3. The management apparatus of claim 1 or claim 2, **characterized by** further comprising:
a profit distribution means (16) for distributing profits to an agent or a user who has distributed the content information on the basis of the distributor ID when transmitting the key information.

4. The management apparatus of claim 1, **characterized by** further comprising:
transmission request inactivation means (5, 10) for managing a group of the user ID and an illegal user and prohibiting the transmission of the key information if the user ID in the transmission request corresponds to the illegal user.

5. The management apparatus on claim 1, **characterized by** further comprising:
a key distribution means (15) for transmitting a part of the key information among the plurality of pieces of key information at every transmission request if the content information includes a plurality of encrypted content capable of being separately decoded by the plurality of pieces of the key information.

6. The management apparatus of claim 1, **characterized by** further comprising:
an additional service providing means (10) for managing a group of the distributor ID, the content ID and an additional service and providing the additional service to the user.

7. A browsing apparatus (90) temporarily occupied by a user holding a content storage medium with encrypted content information therein **characterized by** comprising:
a browsing means (91) for decoding the content information in the storage medium and making the obtained content information be browsed on the basis of previously stored key information.

8. A program stored into a computer readable storage medium used for a management apparatus (10) of a content distribution system to distribute content by separately distributing encrypted content information and key information capable of decoding the content information **characterized by** comprising:
a first program code for making a computer execute processing to manage a data storage apparatus for content (1) for storing a group of a content ID indicating the content information and key information to decode the content information;
a second program code making the computer execute processing to manage a data storage apparatus for key purchase (2) for storing a group of the content ID indicating the content information, the user ID indicating the user and a distributor ID indicating an agent or a user who has delivered the content information;
a third program code for making the computer execute processing to receive a transmission request including key price information equivalent to key price or key price paid information and each of the ID; and
a fourth program code for making the computer execute processing to transmit the key information with reference to each data storage apparatus (1, 2) on the basis of the received each ID.

9. The program of claim 8, **characterized by** further comprising:
a fifth program code for making the computer execute processing to manage a group data storage apparatus (4) for storing a group of the group ID indicating the group to whom the user belong and the user ID of the user; and
a sixth program code for making the computer benefit processing (14) to the user in response to a group ID of the same group of the user ID included in the transmission request when receiving the transmission request.

10. The program of claim 8 or claim 9, **characterized by** further comprising:
a seventh program code for making the computer execute processing (16) for distributing profits within the key price to the agent or the user who has delivered the content information on the basis of the distributor ID stored in the data storage apparatus for key purchase (2) when transmitting the key information.

11. The program of claim 8, **characterized by** further comprising:
a eighth program code for making the computer execute processing to manage a user data storage apparatus (5) for storing a group of the user ID and an illegal user; and
a ninth program code for making the computer execute processing (10) to prohibit transmission of the key information if the user ID in the transmission request is equivalent to the illegal user.

12. The program of claim 8, **characterized by** further comprising:
a tenth program code for making the computer processing (15) to transmit a part of the key information among the plurality of pieces of the key information at every transmission request if the content information includes a plurality of pieces of encrypted content information capable of being decoded by a plurality of pieces of the key information.

13. A program stored into a computer readable storage medium used for a browsing apparatus (90) temporarily occupied by a user holding a content storage medium with encrypted content information stored therein **characterized by** comprising:
a program code for making a computer execute processing to decode the content information stored in the storage medium to output it for browsing.

14. A method for distributing content used for a management apparatus (10) for distributing the content by distributing key information capable of decoding encrypted content information to a user when delivering the content information to the user and receiving key price information or key price paid information from the user **characterized by** comprising:
a step of preparing a database for content (1) for storing a group of a content ID indicating the content information and key information to decode the content information;
a step of preparing a database for key purchase (2) for storing a group of the content ID indicating the content information, a user ID indicating the user and a distributor ID indicating an agent or a user who has distributed the content information;
a step of receiving a transmission request including key price information equivalent to the key price or key price paid information and each of the ID; and
a step of transmitting the key information with reference to each database (1), (2) on the basis of the received each ID.
